# EUROPEAN PATENT APPLICATION

(11) **EP 2 639 539 A1**
(43) Date of publication of application: **18.09.2013**
(21) Application number: 11840495.3
(22) Date of filing: 04.11.2011
(51) Int. Cl.: F28F 1/02, B21D 53/04, F28D 1/053, F28F 1/40

(54) **TUBE FOR HEAT EXCHANGER**

(30) Priority: 11.11.2010 JP 2010252807
(71) Applicant: DENSO CORPORATION, Aichi-pref., 448-8661 (JP)
(72) Inventor: OOHARA, Takahide, Aichi-pref. 448-8661 (JP); HAMADA, Hiroshi, Aichi-pref. 448-8661 (JP); YOSHIDA, Norio, Aichi-pref. 448-8661 (JP); SAKAKIBARA, Tetsuya, Aichi-pref. 448-8661 (JP); MITSUKAWA, Kazuhiro, Aichi-pref. 448-8661 (JP); OU, U, Aichi-pref. 448-8661 (JP); GENDA, Hiroyuki, Aichi-pref. 448-8661 (JP); SAITOU, Mitsuyoshi, Aichi-pref. 448-8661 (JP); NAKABOU, Tadashi, Aichi-pref. 448-8661 (JP); MIYAZAKI, Noriyuki, Aichi-pref. 448-8661 (JP); BABA, Norimasa, Aichi-pref. 448-8661 (JP); SHIMANUKI, Hiroyasu, Aichi-pref. 448-8661 (JP)
(74) Representative: Vigand, Philippe
(86) International application number: PCT/JP2011/006169
(87) International publication number: WO 2012/063443

(57) **Abstract**

A cylindrical member (20) of a tube for a heat exchanger is made of a pair of flat plate portions (21, 22) opposite to each other in parallel in a minor radius direction of a flow passage section, and a pair of curved portions (23, 24) opposite to each other in a major radius direction of the flow passage section and for connecting the pair of flat plate portions (21, 22) to each other. One of the pair of curved portions (23, 24) constructs a bonded portion in which an outer wall portion (241) and an inner wall portion (242) are bonded to each by brazing in a state where the outer wall portion (241) and the inner wall portion (242) overlap each other. The outer wall portion (241) is extended from an end portion of one flat plate portion (21) in the pair of flat plate portions (21, 22) and constructs an outer wall of the cylindrical member (20), and the inner wall portion (242) is extended from an end portion of other flat plate portion (22) in the pair of flat plate portions (21, 22) and constructs an inner wall of the cylindrical member (20). The inner wall portion (242) has a portion opposite to the outer wall portion (241) put into close contact with the outer wall portion (241) and is bonded to the one flat plate portion (21) in a state where a tip end portion (244) opposite to the one flat plate portion (21) is separated from the one flat plate portion (21).

## Description

### CROSS REFERENCE TO RELATED APPLICATION

This application is based on Japanese Patent Application No. 2010-252807 filed on November 11, 2010, the contents of which are incorporated herein by reference in its entirety.

### TECHNICAL FIELD

The present invention relates to a tube for a heat exchanger, which can be usefully applied to, for example, a radiator of an automobile or the like.

### BACKGROUND ART

A flat tube formed by bending a plate-shaped part (for example, a metal plate) has been known as a tube for a heat exchanger. These flat tubes and corrugated fins are alternately stacked on each other to thereby form a heat exchange core, and a tank and piping for introducing a heat exchange medium are coupled to the heat exchange core, so that a heat exchanger is constructed.

This kind of flat tube is made of: a pair of flat plate portions which are opposite to each other with a given gap between them in a minor radius direction; a curved portion which is curved and connected to each of the pair of flat plate portions on one side in a major radius direction to thereby connect the pair of flat plate portions to each other; and a bonded portion in which the respective flat plate portions are bonded to each other on the other end side in the major radius direction.

In the bonded portion of the flat tube, an outer wall portion extending from an end portion of one of the flat plate portions and constructing an outer wall of the flat tube is bonded and brazed to an inner wall portion extending from an one end portion of the other of the flat plate portions and constructing an inner wall of the flat tube in an overlapping state. In this case, if a brazing material is not suitably introduced into the bonded portion in the flat tube, a fluid flowing in the flat tube is likely to leak to the outside because of faulty brazing.

In contrast to this, in order to improve the brazing performance of a bonded portion in the flat tube, for example, in patent document 1 is proposed a construction in which an end portion of an inner wall portion positioned inside the bonded portion is separated from a wall face of an outer wall portion positioned outside the bonded portion.

### [Prior Art Document]

### Patent Document

Patent Document 1: JP-A-2001-137989
If a plate-shaped part of a tube for a heat exchanger is varied in length, width, and strength, a position of an end portion of an inner wall portion may be shifted by a compressive force applied in a minor radius direction of the flat tube when the flat tubes and the corrugated fins are alternately stacked on each other to thereby form a heat exchange core.

At this time, as in the case of the patent document 1, in the construction in which the end portion on the inner wall portion positioned inside the bonded portion is separated from the wall face of the outer wall portion positioned outside the bonded portion, when the position of the end position of the inner wall portion is shifted, a bond shape in the bonded portion is changed to reduce adhesion between the outer wall portion and the inner wall portion. As a result, a brazing performance in the flat tube may be unstable in some cases.

### SUMMARY OF THE INVENTION

In view of the matters described above, an object of the present invention is to improve a brazing performance in a bonded portion of a tube for a heat exchanger.

According to an aspect of the present disclosure, a tube for a heat exchanger includes a cylindrical member in which a heat exchange medium flows and which is made of a plate-shaped part having a flow passage section formed in a flat shape. The flow passage section being orthogonal to a direction in which the heat exchange medium flows. The cylindrical member includes a pair of flat plate portions opposite to each other in parallel in a minor radius direction of the flow passage section, and a pair of curved portions opposite to each other in a major radius direction of the flow passage section and for connecting the pair of flat plate portions to each other. One curved portion of the pair of curved portions constructs a bonded portion in which an outer wall portion, which extends from an end portion of one flat plate portion in the pair of flat plate portions and constructs an outer wall of the cylindrical member, and an inner wall portion, which extends from an end portion of other flat plate portion in the pair of flat plate portions and constructs an inner wall of the cylindrical member, are bonded and brazed to each other in a state where the outer wall portion and the inner wall portion overlap each other. Furthermore, the inner wall portion has an opposite portion opposite to the outer wall portion put into close contact with the outer wall portion, and is bonded to the one flat plate portion in a state where a tip end portion opposite to the one flat plate portion is separated from the one flat plate portion.

According to the present disclosure, when a tube for a heat exchanger is assembled, even if a compressive force is applied to the tube in a minor radius direction of the tube, the position of the tip end position opposite to the flat plate portion in the inner wall portion is only shifted and adhesion between the inner wall portion and the outer wall portion can be held. As a result, the brazing performance in the bonded portion in the tube for a heat exchanger can be improved.

For example, each of the pair of curved portions may be curved in the shape of an arc. According to this, when the compressive force is applied to the tube in a minor radius direction of a flow passage section, it is possible to prevent the bonded portion from being buckled and deformed. Hence, the brazing performance of the bonded portion in the tube for a heat exchanger can be improved.

Further, the tube for a heat exchanger may be constructed in such a way that a portion opposite to the outer wall portion in the inner wall portion is formed in a continuously curved face and that the outer wall portion is extended along the continuously curved face of the inner wall portion.

Still further, the inner wall portion may have an extended portion extended from a portion opposite to the outer wall portion to the other curved portion side. The extended portion may have a portion opposite to the flat plate portions formed in a wavy shape in such a way that the portion functions as an inner fin and further may have a portion opposite to an inner wall face of the other curved portion extended along and put into close contact with an inner peripheral face of the other curved portion and is bonded to the flat plate portion in a state where a tip end portion opposite to the flat plate portion on the other curved portion side is separated from the flat plate portion.

In this way, even in a case where the extended portion in the inner wall portion is constructed as the inner fin, even if the compressive force is applied to the tube in the minor radius direction when the tube for a heat exchanger is assembled, the position of the tip end portion opposite to the flat plate portion in the inner wall portion is only shifted and adhesion between the inner wall and the outer wall portion and adhesion between the extended portion in the inner wall portion and the inner peripheral face of the other curved portion can be held. As a result, the brazing performance in the bonded portion in the tube for a heat exchanger can be improved.

### BRIEF DESCRIPTION OF THE DRAWINGS

The above-mentioned or other objects, constructions, and advantages in the present invention will be made clearer by the following detailed descriptions with reference to the following drawings.
[Fig. 1] Fig. 1 is a front view of a radiator according to a first embodiment.
[Fig. 2] Fig. 2(a) is a section view to show a flow passage section of a flat tube according to the first embodiment, and Fig. 2(b) is an enlarged view of a portion A in Fig. 2(a).
[Fig. 3] Fig. 3(a) and Fig. 3(b) are illustrations to illustrate a process for manufacturing the radiator according to the first embodiment.
[Fig. 4] Fig. 4 is an illustration to illustrate a difference between a cylindrical member according to the first embodiment and a cylindrical member of a related art.
[Fig. 5] Figs. 5(a), 5(b), and 5(c) are illustrations to illustrate a difference between the cylindrical member according to the first embodiment and the cylindrical member in the related art.
[Fig. 6] Figs. 6(a) and 6(b) are illustrations to illustrate a difference between the cylindrical member according to the first embodiment and the cylindrical member in the related art.
[Fig. 7] Figs. 7(a) and 7(b) are illustrations to illustrate the cylindrical member according to the first embodiment.
[Fig. 8] Fig. 8(a) is a section view to show a flow passage section of a flat tube according to a second embodiment, and Fig. 8(b) is an enlarged view of a portion B in Fig. 8(a).
[Fig. 9] Fig. 9 is a partial section view to show a flow passage section of a flat tube according to another embodiment.
[Fig. 10] Fig. 10 is a partial section view to show a flow passage section of a flat tube according to further another embodiment.
[Fig. 11] Fig. 11 is a partial section view to show a flow passage section of a flat tube according to further another embodiment.

### EMBODIMENTS FOR CARRYING OUT THE INVENTION

Hereinafter, embodiments of the present invention will be described on the basis of the drawings. In the respective embodiments to be described below, parts equal or equivalent to each other are denoted by the same reference numerals in the drawings.

### [First Embodiment]

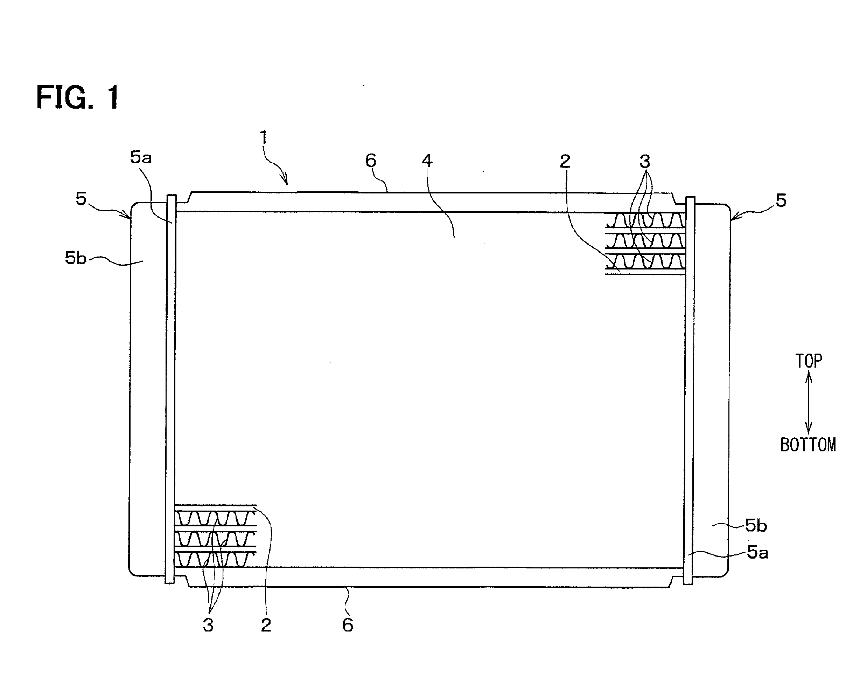

A first embodiment of the present invention will be described on the basis of Fig. 1 to Fig. 7. Fig. 1 is a front view of a radiator 1 according to the present embodiment.

In the present embodiment, a flat tube (tube for a heat exchanger) 2 is applied to a radiator 1 for exchanging heat between an engine cooling water (heat exchange medium) for cooling a vehicle engine (internal combustion engine) and air (atmosphere).

The flat tube 2 in Fig. 1 is a tube in which the engine cooling water flows. The flat tube 2 is formed in a flat shape in such a way that a direction in which air flows (direction vertical to a plane of paper of Fig. 1) is aligned with a major radius direction. Further, a plural number of flat tubes 2 are arranged parallel to each other in a vertical direction in Fig. 1 in such a way that its longitudinal direction is aligned with a horizontal direction in Fig. 1. A detailed description of the flat tube 2 will be provided later.

An outer fin (corrugated fin) 3 formed in a wavy shape is bonded to both outside surfaces of a plane, which is parallel to the direction in which the air flows, of the flat tube 2. The outer fin 3 increases a heat transfer area to the air to thereby accelerate a heat exchange between the engine cooling water and the air. Hereinafter, a heat exchange core part 4, which is constructed of the flat tubes 2 and the outer fins 3, is abbreviated simply as a core part 4.

A header tank 5 extends in a direction orthogonal to a longitudinal direction of the flat tube 2 (in an up and down direction in Fig. 1) at an end portion in the longitudinal direction of the flat tube 2 (end portion in a left and right direction in Fig. 1) and communicates with the plural number of flat tubes 2.

The header tank 5 includes a core plate 5a having the tubes 2 inserted thereinto and bonded thereto and a tank main body 5b constructing a tank interior space together with the core plate 5a. The core part 4 has inserts 6 provided on both end portions thereof, the inserts 6 extending nearly parallel to the longitudinal direction of the flat tube 2 and reinforcing the core part 4.

In the present embodiment, the flat tube 2, the outer fin 3, the core plate 5a, and the tank main body 5b are made of metal (for example, aluminum alloy). The surface of the flat tube 2 and a bonded portion in the core plate 5a and the tank main body 5b are coated with a brazing material.

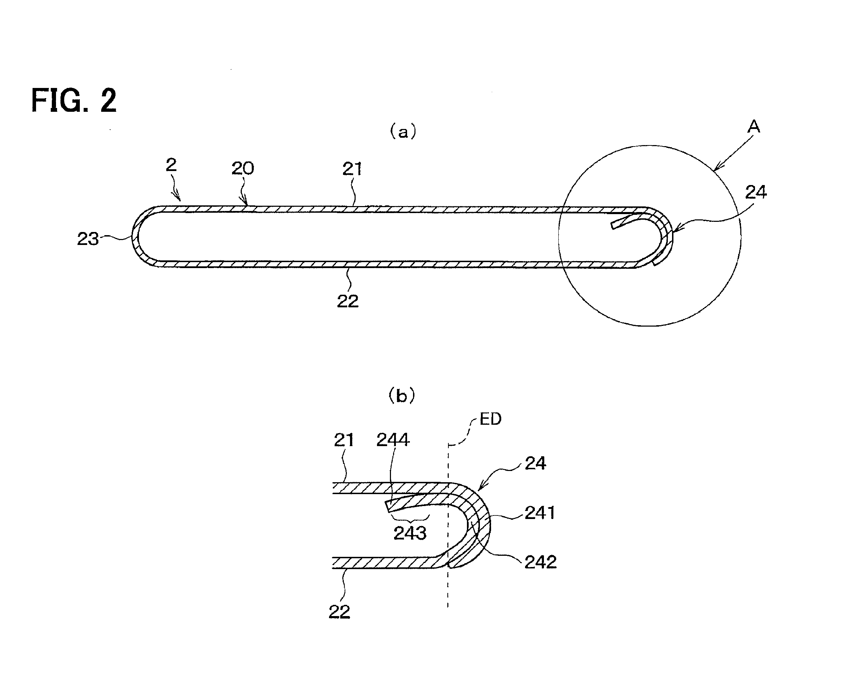

Next, the construction of the flat tube 2 of the present embodiment will be described on the basis of Fig. 2(a) and Fig. 2(b). Fig. 2(a) and Fig. 2(b) are section views to show a flow passage section of the flat tube 2 of the present embodiment. Fig. 2(a) shows an entire flow passage section of the flat tube 2 and Fig. 2(b) shows a partial enlarged view of a portion A in Fig. 2(a).

As shown in Fig. 2(a) and Fig. 2(b), the flat tube 2 of the present embodiment is constructed of a cylindrical member 20 in which a flow passage section orthogonal to a direction in which the engine cooling water flows is formed in a flat shape. The cylindrical member 20 is formed by bending a metal plate (plate-shaped part).

The cylindrical member 20 formed in the flat shape is constructed of a pair of plate portions 21, 22 opposite to each other in parallel in a minor radius direction (in the up and down direction of a plane of paper) and a pair of curved portions 23, 24 each of which is curved outward in the shape of a circular arc in a major radius direction (in the left and right direction of the plane of paper). In the present embodiment, a flat plate portion on an upper side in the drawing is referred to as a first flat plate portion 21 and a flat plate portion on a lower side in the drawing is referred to as a second flat plate portion 22, whereas one curved portion (on a left side in the drawing) is referred to as a first curved portion 23 and the other curved portion (on a right side in the drawing) is referred to as a second curved portion 24.

The first curved portion 23 is a curved portion of connecting the respective flat plate portions to each other and constructs a wall portion of connecting an end portion on one end side (on the left side in Fig. 2) of the first flat plate portion 21 to an end portion on one end side (on the left side in Fig. 2) of the second flat plate portion 22.

The second curved portion 24 is constructed of an outer wall portion 241, which extends from an end portion on the other end side (on the right side) of the first flat plate portion 21 and constructs an outer wall of the cylindrical member 20, and an inner wall portion 242, which extends from an end portion on the other end side (on the right side) of the second flat plate portion 22 and constructs an inner wall of the cylindrical member 20. The second curved portion 24 constructs a bonded portion (double wall) in which the inner wall face of the outer wall portion 241 is bonded by brazing to a portion of the outer wall face of the inner wall portion 242 in an overlapping state.

The inner wall portion 242 in the second curved portion 24 has a portion opposite to the outer wall portion 241 (outer wall face) formed in a continuously curved face. In other words, the inner wall portion 242 of the present embodiment does not have a depressed portion (transit portion) for receiving an end portion of the outer wall portion 241.

On the other hand, the outer wall portion 241 is extended along and bonded to the continuously curved face (outer wall face) of the inner wall portion 242. In other words, the outer wall portion 241 is bonded to the continuously curved face of the inner wall portion 242 in a close contact state with the outer wall face of the inner wall portion 242.

Further, the inner wall portion 242 has an extended portion 243 extended from a portion opposite to the outer wall portion 241 and is bonded to the outer wall portion 241 in a state where a tip end portion 244 of the extended portion 243 is separated from a wall face of the first flat plate portion 21. The extended portion 243 is a portion opposite to the first flat plate portion 21 in the inner wall portion 242 and is constructed in such a way as to be continuously curved from a portion opposite to the outer wall portion 241 in the inner wall portion 242. The extended portion 243 is extended from a boundary (an end position ED of the first flat plate portion 21) between the first flat plate portion 21 and the outer wall portion 241 in the major radius direction of the cylindrical member 20 and is arranged at a position opposite to a portion on the first flat plate portion 21 side of the cylindrical member 20. In the drawing, the end position ED shows an end position of the first flat plate portion 23, that is, a position of the boundary between the first flat plate 21 and the outer wall portion 241. The extended portion 243 is extended from the ED position to the tip end portion 244 side and is arranged opposite to the first flat plate portion 21. In the present embodiment, as shown in Fig. 2(b), a face opposite to the first flat plate portion 21 in the extended portion 243 is constructed of a bonded face portion bonded to a flat face of the first flat plate portion 21 and a separated face portion separated from the first flat plate portion 21 on the tip end portion 244 side.

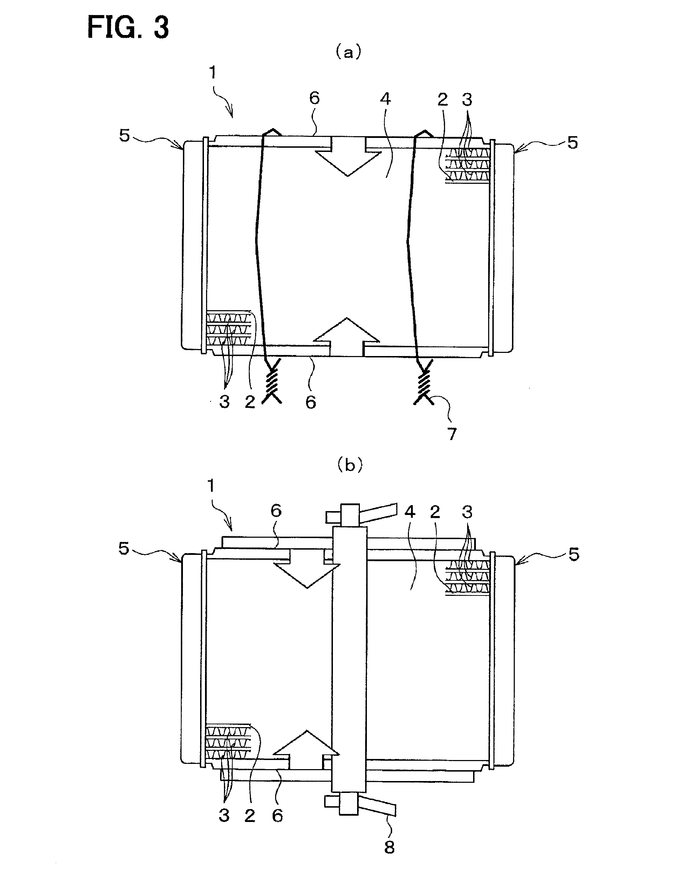

Next, a method for manufacturing the radiator 1 will be simply described by the use of Figs. 3(a) and 3(b). Figs. 3(a) and 3(b) are illustrations to illustrate a process for manufacturing the radiator 1.

First, as shown in Fig. 2, a metal plate (plate-shaped part) having given dimensions is bent nearly at a central portion by a roll forming or the like and then both end portions of the bent metal plate are overlaid on each other in close contact to thereby form the cylindrical member 20 of the flat tube 2.

The flat tubes 2 and the outer fins 3 are alternately stacked on each other to thereby assemble the core part 4 and the core part 4 is further assembled with the header tank 5. Then, these parts are prevented from moving by a jig as required and are kept in a temporary assembling state. When the core part 4 is assembled, in order to suitably put the flat tubes 2 and the outer fins 3 into close contact with each other, the flat tubes 2 and the outer fins 3 are temporarily fixed to each other by wires 7 (see Fig. 3(a)) or a clamp 8 (see Fig. 3(b)) in a state where a load is applied to the flat tubes 2 and the outer fins 3 in a staking direction.

Thereafter, an assembly kept in the temporary assembling state is heated to a temperature not lower than a melting point of the brazing material coated on the respective parts in a vacuum heating furnace or a heating furnace in an inert gas atmosphere, so that the brazing material is melted and the respective to-be-bonded parts of the assembly are integrally brazed to each other.

Here, the flat tube 2 has a compressive force applied thereto in a direction in which the first flat plate portion 21 and the second flat plate portion 22 come closer to each other (in a minor radius direction of the cylindrical member 20) by the load applied thereto by the jig when the core part 4 is assembled or by the outer fin 3 being stacked thereon. In the present embodiment, the flat tube 2 is constructed of one metal plate (plate-shaped part), so that if the plate-shaped part is varied in length, width, and strength, when the compressive force is applied to the flat tube 2 in the minor radius direction of the cylindrical member 20, the position of the tip end portion 244 of the inner wall portion 242 in the second curved portion 24 of the cylindrical member 20 is shifted.

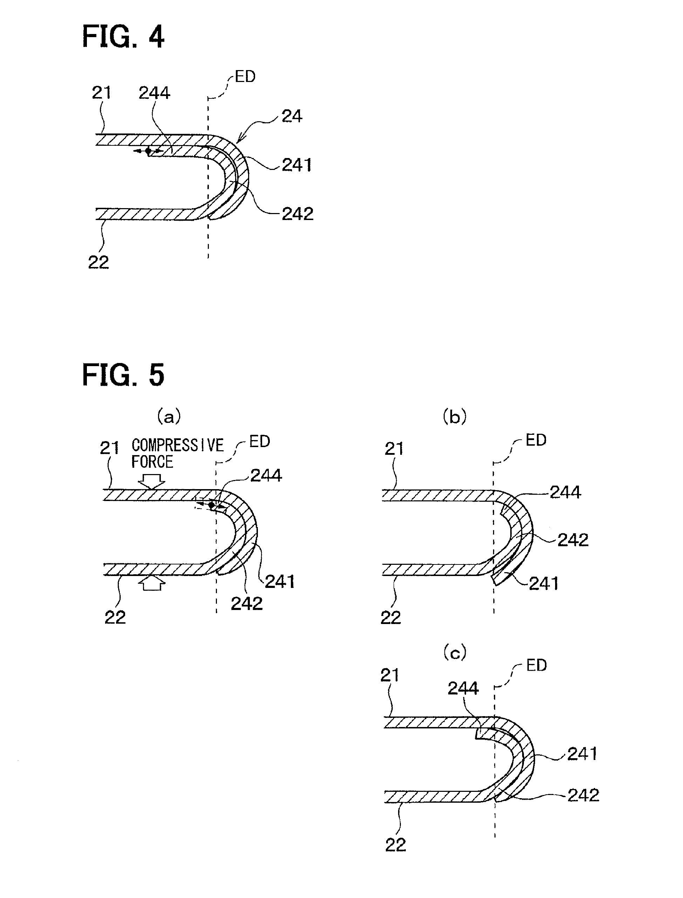

At this time, in a structure in which the tip end portion 244 of the inner wall portion 242 in the second curved portion 24 is not extended to a position opposite to the first flat plate portion 21 but in which the tip end portion 244 of the inner wall portion 242 abuts on the outer wall portion 241, when the compressive force is applied to the flat tube 2 as shown in Fig. 5(a), the tip end portion 244 of the inner wall portion 242 can be shifted in some cases in a direction to push up the first flat plate portion 21 or in a direction to push out the outer wall portion 241, as shown in Fig. 5(b) and Fig 5(c).

Further, even if the tip end portion 244 of the inner wall portion 242 in the second curved portion 24 is extended to the position opposite to the first flat plate portion 21 as in the case of the cylindrical member 20 of the present embodiment, in a structure in which the tip end portion 244 of the inner wall portion 242 abuts on the first flat plate portion 21, when the compressive force is applied to the flat tube 2 as shown in Fig. 4, the tip end portion 244 of the inner wall portion 242 can be shifted in some cases in a direction to push up the first flat plate portion 21.

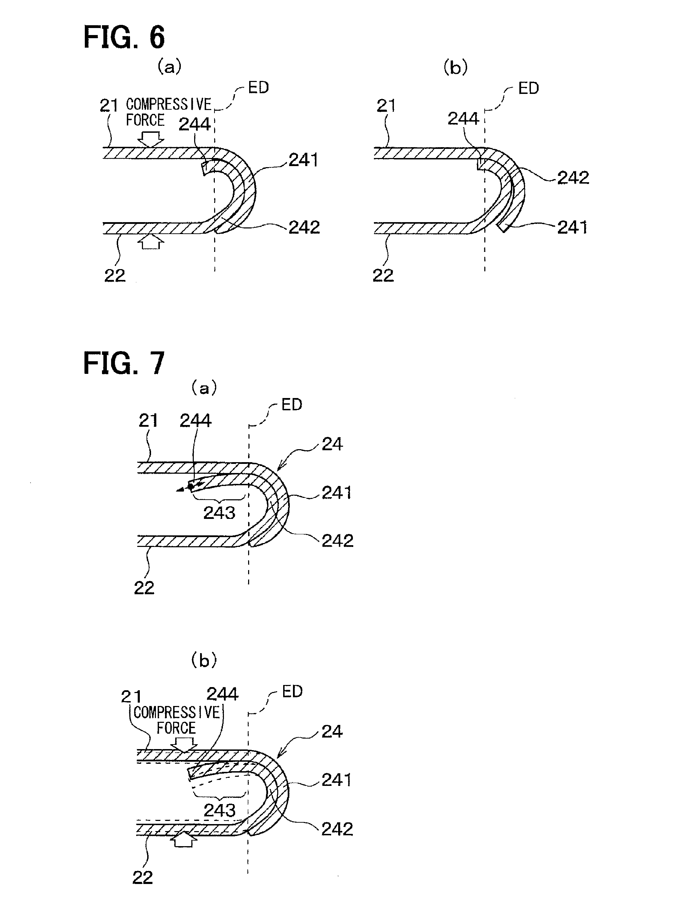

Still further, in a structure in which the tip end portion 244 of the inner wall portion 242 in the second curved portion 24 is not extended to the position opposite to the first flat plate portion 21 but in which the tip end portion 244 of the inner wall portion 242 is separated from the outer wall portion 241, as shown in Fig. 6(b) and Fig. 6(c), when the compressive force is applied to the flat tube 2, the tip end portion 244 of the inner wall portion 242 can be shifted in some cases into a gap between the outer wall portion 241 and the inner wall portion 242. Figs. 4 to 6 are illustrations to illustrate a difference between the cylindrical member 20 of the present embodiment and a cylindrical member of the related art.

In these structures, when the position of the tip end portion 244 of the inner wall portion 242 is shifted, the shape of close contact between the outer wall portion 241 and the inner wall portion 242 is varied to easily cause the gap between the outer wall portion 241 and the inner wall portion 242, which hence makes a brazing performance at the bonded portion unstable. This presents a problem of causing a liquid leak and an internal corrosion in the bonded portion of the flat tube 2.

In contrast to this, the present embodiment employs a structure in which the tip end portion 244 of the inner wall portion 242 in the second curved portion 24 is extended to the position opposite to the first flat plate portion 21 and in which the tip end portion 244 of the inner wall portion 242 is separated from the first flat plate portion 21. Specifically, as shown in Fig. 2(b), a face opposite to the first flat plate portion 21 in the extended portion 243 is constructed of a bonded face portion bonded to a flat face of the first flat plate portion 21 and a separated face portion separated from the first flat plate portion 21 on the tip end portion 244 side.

In the flat tube 2 having the structure like this, even if the compressive force is applied to the flat tube 2 as shown in Fig. 7(b), the position of the tip end portion 244 of the inner wall portion 242 is shifted in a state in which the shape of close contact between the outer wall portion 241 and a portion opposite to the outer wall portion 241 in the inner wall portion 242 is held.

Thus, this makes it difficult to cause a gap between the outer wall portion 241 and the inner wall portion 242 and hence can improve the brazing performance in the flat tube 2. As a result, it is possible to effectively prevent the liquid leak and the internal corrosion from being caused at the bonded portion of the flat tube 2.

### (Second Embodiment)

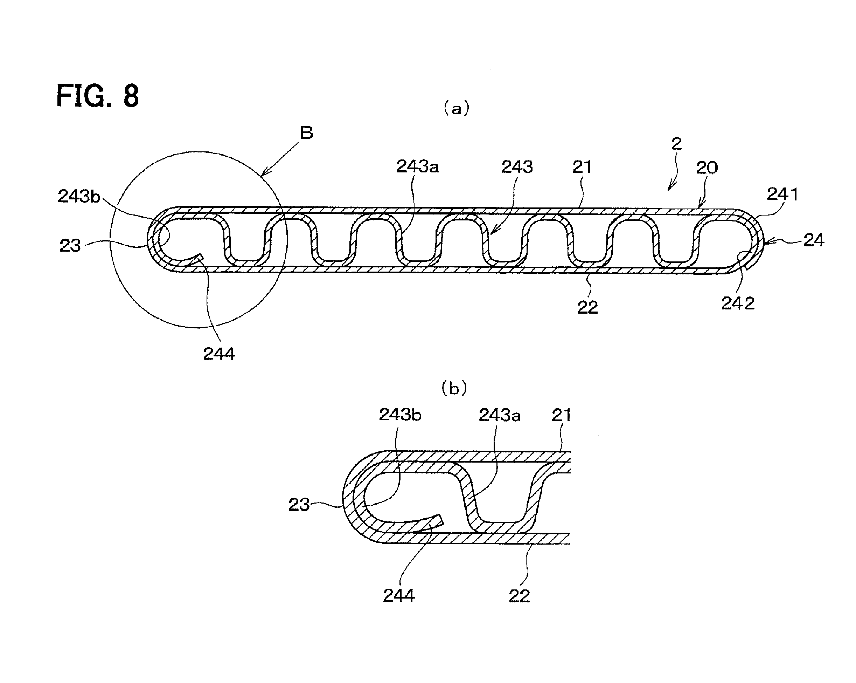

Next, a second embodiment of the present invention will be described on the basis of Fig. 8(a) and Fig. 8(b). Here, Fig. 8(a) and Fig. 8(b) are section views to show a flow passage section of a flat tube 2 of the present embodiment. Fig. 8(a) shows an entire flow passage section of the flat tube 2 and Fig. 8(b) shows a partial enlarged view of a portion B in Fig. 8(a). In the present embodiment, the descriptions of parts similar to or equivalent to those in the first embodiment will be omitted or simplified.

The flat tube 2 of the present embodiment has an extended portion 243 in which an inner wall portion 242 is extended from a portion opposite to an outer wall portion 241 to a first curved portion 23. In the extended portion 243, a portion (fin portion 243a) opposite to the respective flat plate portions 21, 22 in a minor radius direction of the flat tube 2 is formed in a wavy shape in such a way as to function as an inner fin for increasing a heat transfer area for an engine cooling water. The fin portion 243a has its peak portions of the wavy shape formed in such a way as to be in contact with the respective flat plate portions 21, 22.

Further, the extended portion 243 has a portion (fin end portion 243b) opposite to an inner wall face of the first curved portion 23 extended along and put into close contact with an inner peripheral face of the first curved portion 23 and is bonded to the second flat plate 22 in a state where a tip end portion 244 opposite to the second flat plate portion 22 on the first curved portion 23 side is separated from the second flat plate portion 22. As shown in Fig. 8(b), the extended portion 243 on the tip end portion 244 side is bonded to the second flat plate portion 22 with the tip end portion 244 separated from the second flat plate portion 22.

According to the construction of the present embodiment, the extended portion 243 is bonded to the second flat plate portion 22 in a state where the tip end portion 244 is separated from the second flat plate portion 22, so that even if a compressive force is applied to the flat tube 2 in a minor radius direction of the flat tube 2, the position of an end portion of the second flat plate portion 22 is only shifted and the inner wall portion 242 can be bonded to the outer wall portion 241 and the extended portion 243 can be bonded to the second flat plate portion 22 in a state where the close contact between the inner wall portion 242 and the outer wall portion 241 and the close contact between the extended portion 243 in the inner wall portion 242 and the inner peripheral face of the first curved portion 23 are held. As a result, the brazing performance at the bonded portion in the flat tube 2 can be improved.

### (Other Embodiments)

Up to this point, the embodiments of the present invention have been described but the present invention is not limited to these embodiments. Unless the present invention does not depart from the scope described in the respective claims, the present invention is not limited by the words and phrases described in the respective claims but can cover also a scope easily replaced from the claims by a person skilled in the art and can have modifications added thereto as required, the modifications being based on knowledge usually possessed by the person skilled in the art,. For example, the present invention can be variously modified as in the following manner.

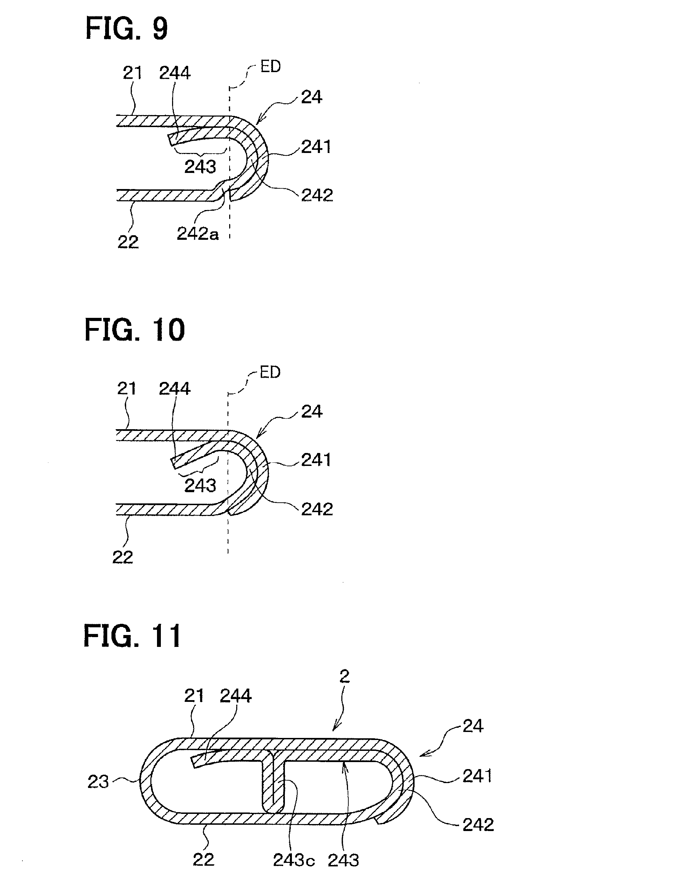

(1) In the respective embodiments described above, the inner wall portion 242 in the second curved portion 24 has a portion (outer wall face) opposite to the outer wall portion 241 formed by the continuously curved face, but the present invention is not limited to this. For example, as shown in Fig. 9, the invention may employ a construction in which the inner wall portion 242 has a depressed portion 242a for receiving an end portion of the outer wall portion 241.

(2) In the first embodiment described above, the extended portion 243 in the inner wall portion 242 is constructed in such a way as to be continuously curved from the portion opposite to the outer wall portion 241 in the inner wall portion 242, but the present invention is not limited to this. For example, as shown in Fig. 10, the present invention may employ a construction in which the extended portion 243 in the inner wall portion 242 is bent from a portion opposite to the outer wall portion 241 in the inner wall portion 242.

(3) In the first embodiment described above, the tip end portion 244 of the extended portion 243 in the inner wall portion 242 is separated from the first flat plate portion 21 on the second curved portion 24 side in the first flat plate portion 21, but the present invention is not limited to this. For example, as shown in Fig. 11, the tip end portion 244 of the extended portion 243 in the inner wall portion 242 may be separated from the first flat plate portion 21 on the first curved portion 23 side in the first flat plate portion 21. Further, the present invention may employ a construction in which the extended portion 243 is bent in the minor radius direction between the first flat plate portion 21 and the second flat plate portion 22 to thereby form a bent portion 243c and in which the bent portion 243c is made to abut on the first flat plate portion 21 and the second flat portion 22 to thereby function as a support part for supporting the first flat plate portion 21 and the second flat portion 22.

(4) In the respective embodiments described above, the first curved portion 23 and the second curved portion 24 are formed in the shape of the circular arc. However, the shape of the first curved portion 23 and the shape of the second curved portion 24 are not limited to in the shape of the circular arc but may be a shape of a combination of circles having different radiuses of curvature. Further, the shape of the first curved portion 23 and the shape of the second curved portion 24 may be a shape of a combination of a curved face and a flat face parallel to the minor radius direction of the cylindrical member 20.

(5) In the respective embodiments described above have been described the examples in which the tube for a heat exchanger according to the present invention is applied to the radiator 1. However, the present invention is not limited to this but can be applied to various kinds of heat exchangers such as a heater core unit, an evaporator, and a condenser.

## Claims

1. A tube for a heat exchanger, comprising
a cylindrical member (20) in which a heat exchange medium flows and which is made of a plate-shaped part having a flow passage section formed in a flat shape, the flow passage section being orthogonal to a direction in which the heat exchange medium flows, wherein
the cylindrical member (20) includes a pair of flat plate portions (21, 22) opposite to each other in parallel in a minor radius direction of the flow passage section, and a pair of curved portions (23, 24) opposite to each other in a major radius direction of the flow passage section and for connecting the pair of flat plate portions (21, 22) to each other,
one curved portion (24) of the pair of curved portions (23, 24) constructs a bonded portion in which an outer wall portion (241), which extends from an end portion of one flat plate portion (21) in the pair of flat plate portions (21, 22) and constructs an outer wall of the cylindrical member (20), and an inner wall portion (242), which extends from an end portion of other flat plate portion (22) in the pair of flat plate portions (21, 22) and constructs an inner wall of the cylindrical member (20), are bonded by brazing to each other in a state where the outer wall portion (241) and the inner wall portion (242) overlap each other, and
the inner wall portion (242) has an opposite portion opposite to the outer wall portion (241) put into close contact with the outer wall portion (241), and is bonded to the one flat plate portion (21) in a state where a tip end portion (244) of the inner wall portion (242) opposite to the one flat plate portion (21) is separated from the one flat plate portion (21).

2. The tube for a heat exchanger according to claim 1, wherein each of the pair of curved portions (23, 24) is curved in a shape of an arc.

3. The tube for a heat exchanger according to claim 1 or claim 2, wherein
the inner wall portion (242) has a continuously curved face opposite to the outer wall portion (241), and
the outer wall portion (241) is extended along and bonded to the continuously curved face of the inner wall portion (242).

4. The tube for a heat exchanger according to any one of claims 1 to 3, wherein
the inner wall portion (242) has an extended portion (243) extended from a portion opposite to the outer wall portion (241), to a side of the other curved portion (23),
the extended portion (243) has a wavy-shaped portion that is opposite to the pair of flat plate portions (21, 22) and is formed in a wavy shape in such a way that the wavy-shaped portion functions as an inner fin, and further has a portion opposite to an inner wall face of the other curved portion (23) extended along and put into close contact with the inner wall face of the other curved portion (23), and
the extended portion (243) is bonded to the flat plate portion (21, 22) in a state where a tip end portion (244) opposite to the flat plate portion (21, 22) on a side of the other curved portion (23) is separated from the flat plate portion (21, 22).

5. The tube for a heat exchanger according to any one of claims 1 to 3, wherein
the inner wall portion (242) has an extended portion (243) extended from a portion opposite to the outer wall portion (241) to a tip end portion (244) and opposed to a part of the flat plate portion (21, 22), and
a face opposite to the flat plate portion (21, 22) in the extended portion (243) is constructed of a bonded face portion bonded to a flat face of the flat plate portion (21, 22) and a separated face portion separated from the flat plate portion (21, 22) at the tip end portion (244).
